(19) **Europäisches Patentamt / European Patent Office / Office européen des brevets**

(11) **EP 3 321 115 B1**

(12) # EUROPEAN PATENT SPECIFICATION

(45) Date of publication and mention of the grant of the patent:
**24.08.2022 Bulletin 2022/34**

(21) Application number: **16821439.3**

(22) Date of filing: **06.07.2016**

(51) International Patent Classification (IPC):
**B60J 1/20** (2006.01) **B60S 1/02** (2006.01)
**H01Q 1/32** (2006.01) **H01Q 1/12** (2006.01)
**H01Q 1/52** (2006.01)

(52) Cooperative Patent Classification (CPC):
**B60J 1/20; B60S 1/02; H01Q 1/1278; H01Q 1/3208; H01Q 1/52**

(86) International application number:
**PCT/JP2016/070048**

(87) International publication number:
**WO 2017/006970 (12.01.2017 Gazette 2017/02)**

(54) **VEHICLE WINDOW GLASS**

FAHRZEUGFENSTERGLAS

VITRE DE FENÊTRE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015 JP 2015138192**

(43) Date of publication of application:
**16.05.2018 Bulletin 2018/20**

(73) Proprietor: **Nippon Sheet Glass Company, Limited Tokyo 108-6321 (JP)**

(72) Inventors:
• **MORISHITA, Hiromasa**
**Tokyo 108-6321 (JP)**
• **OSHIMA, Hideaki**
**Tokyo 108-6321 (JP)**

• **TOKUDA, Tatsumi**
**Tokyo 108-6321 (JP)**

(74) Representative: **Mewburn Ellis LLP**
**Aurora Building**
**Counterslip**
**Bristol BS1 6BX (GB)**

(56) References cited:
EP-A1- 2 458 672    EP-A1- 3 101 734
WO-A1-2012/153664    JP-A- S52 122 739
JP-A- S52 147 622    JP-A- 2000 101 323
JP-A- 2004 260 504    JP-A- 2006 197 184
JP-A- 2013 131 889    JP-A- 2015 056 716
US-A- 5 952 977

**Description**

Technical Field

The present invention relates to a vehicle window glass.

Background Art

Devices such as defoggers for removing condensation or ice and antennas for receiving predetermined radio waves may be provided on the surface of the window glass for vehicles (particularly the rear glass) that is to be attached to an automobile. Defoggers have a plurality of horizontal heating wires that extend horizontally across the entirety of the window glass. Also, as antennas, DAB antenna elements for receiving DAB (Digital Audio Broadcasting; hereinafter, referred to as "DAB") broadcasts may be used, for example, and Patent Literature 1 proposes a window glass for vehicles on which a DAB antenna element is provided together with a defogger. JP 2000-101323 A concerns a rear window glass pane which space is effectively utilized. EP 2458672 A1 concerns a vehicular antenna apparatus including a window glass attached to a vehicle, a glass antenna including a first antenna conductor, and a first feeding section and a second feeding section serving as a pair of feeding points of the first antenna conductor, a coaxial cable including an inner conductor connected to the first feeding section and an outer conductor is connected to the second feeding section, and a grounding member configured to ground to a vehicle body a middle part of the outer conductor of the coaxial cable extending from the pair of feeding points to a signal processing unit installed on the vehicle body.

Citation List

Patent Literature

Patent Literature 1: JP 2014-216805A

Summary of Invention

Technical Problem

However, the inventor of the present invention found that, with a window glass such as described above, problems such as the following occur. That is, the inventor found that, with a window glass such as described above, a problem occurs in that the reception performance of the DAB antenna element decreases, due to radio waves in the frequency band that should be received by the DAB antenna element being excited as a standing wave in the horizontal heating wires. The present invention was made in order to solve the above problem, and an object thereof is to provide a vehicle window glass that is able to suppress a decrease in the reception performance of a DAB antenna element, even in the case where a defogger is provided together with the DAB antenna element.

Solution to Problem

A vehicle window glass according to the present invention includes a glass plate, which is a single glass plate or a laminated glass in which an intermediate film is sandwiched by two glass plates, a pair of bus bars formed on the glass plate, a defogger having a plurality of horizontal heating wires that connect the pair of bus bars, at least one vertical antenna element provided in the defogger and intersecting at least one of the horizontal heating wires, a DAB antenna element formed on the glass plate and disposed on an upper side or a lower side of the defogger, and a standing wave canceller disposed further on the defogger side than the DAB antenna element, a distance L between each of the bus bars and the vertical antenna element or a distance L between the vertical antenna elements, a wavelength $\lambda$ of a reception wave of the DAB antenna element and a wavelength shortening rate $\gamma$ of the glass plate satisfying $(\lambda \cdot \gamma/3) \cdot n \leq L \leq (\lambda \cdot \gamma/1.5) \cdot n$ (where n is an integer, and where $\gamma$ is approximately 0.7 when the glass plate is a single glass plate and $\gamma$ is approximately 0.5 when the glass plate is a laminated glass), the DAB antenna element (4) being constituted by a dipole antenna, the standing wave canceller (5) being disposed between the DAB antenna element (4) and the defogger (2).

Note that "horizontal" in the present invention is used to mean a direction roughly parallel to the installation surface of the vehicle, and "vertical" refers to a direction that roughly intersects the "horizontal". Accordingly, "horizontal" and "vertical" do not necessarily indicate strict directions, and, for example, what is referred to as "horizontal" may be slightly inclined rather than being strictly parallel to the installation surface of the vehicle. This meaning of "horizontal" and "vertical" is the same throughout this specification.

In the above vehicle window glass, n can be set to 1.

In the above vehicle window glass, a configuration can be adopted in which the standing wave canceller has at least one horizontal part extending along the horizontal heating wires, and a connection part connected to the vertical antenna element or one of the bus bars, and a length S of the horizontal part satisfies $\lambda \cdot \gamma/6 \leq S \leq \lambda \cdot \gamma/3$ (where $\gamma$ is approximately 0.7 when the glass plate is a single glass plate and $\gamma$ is approximately 0.5 when the glass plate is a laminated glass).

In the above vehicle window glass, the DAB antenna element can be disposed on the upper side of the defogger.

In the above vehicle window glass, the distance between the standing wave canceller and the defogger can be set to 50 mm or less.

In the above vehicle window glass, the distance between the DAB antenna element and the defogger can be set to 5 to 100 mm.

Advantageous Effects of Invention

With a vehicle window glass according to the present invention, a decrease in the reception performance of a DAB antenna element can be suppressed, even in the case where a defogger is provided together with the DAB antenna element.

Brief Description of Drawings

FIG. 1 is a front view of a rear glass of an automobile in which one embodiment of a vehicle window glass according to the present invention is mounted.
FIG. 2 is a diagram showing an example of a stationary wave.
FIGS. 3 are plan views showing a window glass according to a reference example 1 (FIG. 3(a)), a comparative example (FIG. 3(b)), and a reference example 2 (FIG. 3 (c)) .
FIG. 4 is a graph showing the reception performance of the reference examples 1 and 2 and the comparative example.
FIG. 5 is a plan view showing a window glass according to a working example 3.
FIG. 6 is a graph showing the reception performance of working examples 1 to 5 and the comparative example.
FIG. 7 is a diagram showing the current distribution of defoggers according to the working example 3 and the comparative example.
FIG. 8 is a plan view showing a window glass according to a working example 6.
FIG. 9 is a plan view showing a window glass according to a working example 7.
FIG. 10 is a plan view showing a window glass according to a working example 8.
FIG. 11 is a plan view showing a window glass according to a working example 9.
FIG. 12 is a plan view showing a window glass according to a working example 10.
FIG. 13 is a plan view showing a window glass according to a working example 11.
FIG. 14 is a graph showing the reception performance of the working examples 6 and 7 and the comparative example.
FIG. 15 is a graph showing the reception performance of the working examples 8 and 9 and the comparative example.
FIG. 16 is a graph showing the reception performance of the working example 10 and the comparative example.
FIG. 17 is a graph showing the reception performance of the working example 11 and the comparative example.

Description of Embodiments

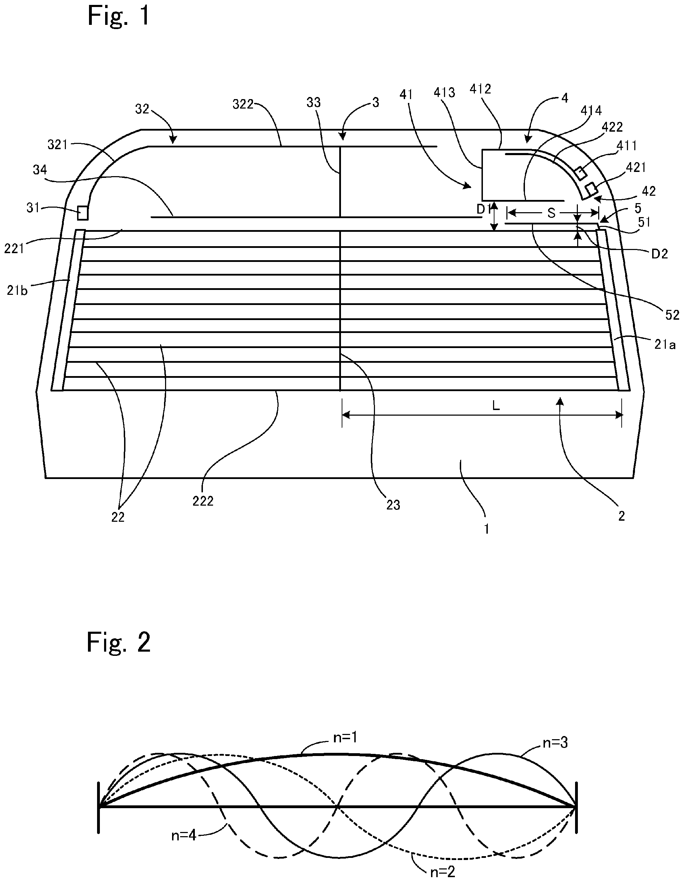

Hereinafter, one embodiment of a vehicle window glass according to the present invention will be described, with reference to the drawings. FIG. 1 is a front view of a rear glass of an automobile to which the vehicle window glass according to the present embodiment is applied. Note that, hereinafter, for convenience of description, the up-down direction in FIG. 1 may be referred to as the up-down direction or the vertical direction, and the left-right direction in FIG. 1 may be referred to as the left-right direction or the horizontal direction, based on the orientation of FIG. 1, but this orientation is not intended to limit the invention.

1. Vehicle Window Glass

As shown in FIG. 1, with the vehicle window glass according to the present embodiment, a defogger 2, an FM antenna element 3, a DAB antenna element 4 and a standing wave canceller 5 are mounted on a glass plate 1. Hereinafter, these members will be described in order.

1-1. Glass Plate

A well-known glass plate for automobiles can be utilized for the glass plate 1. For example, heat absorbing glass, common clear glass, common green glass or UV green glass may be utilized as the glass plate 1. Such a glass plate 1 needs, however, to realize a visible light transmittance in line with safety standards of the country in which the automobile is used. For example, solar absorbance, visible light transmittance and the like can be adjusted to satisfy safety standards. Below, an example of the composition of clear glass and an example of the composition of heat absorbing glass are shown.

Clear Glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkaline metal)
Total iron oxide in terms of $Fe_2O_3$ (T-$Fe_2O_3$): 0.08 to 0.14 mass%

Heat Absorbing Glass

The composition of heat absorbing glass can, for example, be given as a composition including total iron oxide in terms of $Fe_2O_3$ (T-$Fe_2O_3$) at a ratio of 0.4 to 1.3 mass%, $CeO_2$ at a ratio of 0 to 2 mass%, and $TiO_2$ at a ratio of 0 to 0.5 mass%, based on the composition of clear glass, and in which the skeletal component (mainly $SiO_2$ or $Al_2O_3$) of the glass is reduced by an amount equivalent to the increase in T-$Fe_2O_3$, $CeO_2$ and $TiO_2$.
Note that the type of glass plate 1 is not limited to clear glass or heat absorbing glass, and is selectable as appropriate according to the embodiment. For example, the glass plate 1 may be a resin window made of acrylic resin, polycarbonate resin or the like.
Also, such a glass plate 1, apart from being constituted by a single glass plate, may be a laminated glass in which an intermediate film such as a resin film is sandwiched by a plurality of plates of glass. Note that the wavelength shortening rate γ of a glass plate changes depending on factors such as the thickness of the glass plate, and is, for example, approximately 0.7 in the case where a defogger, an antenna element and the like are formed on a single glass plate, and approximately 0.5 in the case of laminated glass in which an intermediate film is sandwiched by two glass plates.

1-2. Defogger

Next, the defogger 2 will be described. As shown in FIG. 1, the defogger 2 is disposed in a vicinity of the middle of the glass plate 1 in the vertical direction, and is formed so as to extend across the entirety of the glass plate 1 in the left-right direction. Specifically, this defogger 2 includes a pair of bus bars 21a and 21b for power supply that extend in the up-down direction along both side edges of the glass plate 1. Between both bus bars 21a and 21b, a plurality of horizontal elements (horizontal heating wires) 22 are disposed in parallel at a predetermined interval, and heat for defogging is generated by power supply from the bus bars 21a and 21b. Also, in this defogger 2, an FM antenna element 23 which is part of one antenna element for FM band reception that extends in the up-down direction is provided, in a vicinity of the middle in the left-right direction. While a detailed description will be given later, this FM antenna element 23 extends so as to intersect all of the horizontal elements 22, and so as to connect the horizontal element that is uppermost (hereinafter, uppermost horizontal element 221) and the horizontal element that is lowermost (hereinafter, lowermost horizontal element 222).
Also, a distance L between each of the bus bars 21a and 21b and the FM antenna element 23, a wavelength λ of the reception wave of the DAB antenna element 4 which will be discussed later and the wavelength shortening rate γ of the abovementioned glass plate 1 satisfy the following equation (1). Note that the length L can also be referred to as the length of the horizontal elements 22 partitioned by the FM antenna element 23.

$$\lambda \cdot \gamma / 3 \leq L \leq \lambda \cdot \gamma / 1.5 \qquad (1)$$

Incidentally, a standing wave constantly occurs in the defogger 2, and the wavelength band of this standing wave is attributable to the abovementioned length L. Accordingly, if the length L is an integer multiple of λ/2, in the case where the DAB antenna element 4 which will be discussed later is disposed near the defogger 2, the DAB antenna element 4 will be affected by the standing wave that occurs in the defogger 2. More specifically, in the case where the length L satisfies the above equation (1), the standing wave that occurs in the defogger 2 will affect the reception performance of the DAB antenna element 4. As a countermeasure to this, the standing wave canceller 5 is provided in the present embodiment, as will be discussed later.

1-3. FM Antenna Element

Next, the FM antenna element 3 will be described. This FM antenna element 3 is disposed on the glass plate 1 in the space that is upward of the defogger 2. Specifically, this FM antenna element 3 includes a power supply point 31 that is disposed upward of the left-side bus bar 21b, and a first element 32 that extends along the left side edge and the upper end edge of the glass plate 1 from this power supply point 31. An FM receiver (illustration omitted) installed in the automobile is then connected to the power supply point 31. Also, the first element 32 is constituted by a first region 321 that extends along the left side edge of the glass plate 1 from the power supply point 31 to a vicinity of the upper left corner portion of the glass plate 1, and a second region 322 that is connected to the upper end of this first region 321 and extends along the upper end edge of the glass plate 1. The second region 322 extends, in the left-right direction, to a position slightly beyond a vicinity of the middle of the glass plate 1. In the second region 322 of this first element 32, a second element 33 that extend downward toward the defogger 2 is connected from a position in a vicinity of the middle of the glass plate 1. The second element 33 is disposed, in the left-right direction, in a position corresponding to the FM antenna element 23 of the defogger 2, and extends to near the uppermost horizontal element 221 of the defogger 2. A third element 34 that extends in the left-right direction is connected to this second element 33. The third element 34 extends in parallel to the uppermost horizontal element 221 of the defogger 2, and extends from a vicinity of the abovementioned power supply point 31 to a vicinity of an intermediate point between the FM antenna element 23 of the defogger 2 and the right-side bus bar 21a.

Also, as mentioned above, the FM antenna element 23 is provided in the defogger 2, and is capacitively coupled to the FM antenna element 3. The effective area of the FM antenna can thereby be expanded.

1-4. DAB Glass Element

Next, the DAB antenna element 4 will be described. DAB is a digital radio broadcasting standard that is employed in Europe and elsewhere. In DAB, band 3 having a frequency band of 174 MHz to 240 MHz and L band having a frequency band of 1452 MHz to 1492 MHz are mainly used. In the present invention, a DAB antenna element 4 whose main frequency band is band 3 is targeted.

The DAB antenna element 4 according to the present embodiment is a so-called dipole antenna, and is constituted by an antenna main body element 41 and a ground connection element 42. The antenna main body element 41 includes a power supply point 411 provided in a vicinity of the upper right corner portion of the glass plate 1, and a first region 412 that extends toward the left side along the upper end edge of the glass plate 1 from this point. This first region 412 extends, in the left-right direction, to slightly further to the right side than the right end portion of the third element 34 of the FM antenna element 3, and a second region 413 that extends downward is connected to a right end portion of this first region 412. The second region 413 extends to slightly upward of the third element 34, and a third region 414 that extends to a vicinity of the right side edge of the glass plate 1 in the left-right direction is connected to a lower end portion of this second region 413.

The third region 414 is located in the lowermost portion of the DAB antenna element 4, and a distance D1 between this third region 414 and the uppermost horizontal element 221 of the defogger 2 is, for example, preferably 5 to 100 mm, and more preferably 5 to 60 mm. This is because the disposition area of the DAB antenna element 4 is limited, and thus the length of the second region 413, which is a vertical element of the DAB antenna element 4, will be shortened when the distance D1 is large. To be more specific, since the vertical element length greatly affects the reception sensitivity in the DAB antenna element 4, there is a risk that shortening of the length of the second region 413 will lead to a decrease in the sensitivity of the DAB antenna element 4. On the other hand, the influence exerted by the standing wave of the defogger 2 increases when the distance D1 is smaller than 5 mm. In order to prevent this, the distance D1 is preferably larger than 5 mm.

On the other hand, the ground connection element 42 includes a ground connection point 421 and a linear main body part 422 that extends upward from this point. The ground connection point 421 is disposed slightly downward from the power supply point 411 of the antenna main body element 41, and the main body part 422 extends along the first region 412 of the antenna main body element 41, slightly further on the left side than the first region 412, and extends to near the second region 413.

Also, a DAB receiver (illustration omitted) is provided in the automobile, and the power supply point 411 of the antenna main body element 41 is connected to an internal conductor of a coaxial cable (illustration omitted) connected to this receiver. On the other hand, the ground connection point 421 of the ground connection element 42 is electrically connected to an external conductor of the coaxial cable and is grounded.

1-5. Standing Wave Canceller

Next, the standing wave canceller 5 will be described. This standing wave canceller 5 includes a connection part 51 that is connected to the upper end portion of the right-side bus bar 21a and extends upward, and a horizontal part 52 that extends toward the left side from the upper end of this connection part 51. The connection part 51 is formed to be short, and extends, in the vertical direction, between the third element 34 of the FM antenna element 3 and the uppermost horizontal element 221 of the defogger 2. Also, the horizontal part 52 of the standing wave canceller 5 extends to near the right end portion of the third element 34 in parallel to the uppermost horizontal element 221. Accordingly, the standing wave canceller 5 is disposed, in the up-down direction, between the defogger 2 and the DAB antenna element 4. Also, the standing wave canceller 5 is disposed, in the horizontal direction, between both horizontal end portions of the DAB antenna element 4.

A distance D2 between this horizontal part 52 and the uppermost horizontal element 221 of the defogger 2 is, for example, preferably 50 mm or less, and more preferably 30 mm or less. This is attributable to setting the abovementioned distance D1 to 100 mm or less, and to disposing the standing wave canceller 5 further on the defogger side than the DAB antenna element 4. The horizontal part 52 of the standing wave canceller 5 does not, however, necessarily need to be parallel to the uppermost horizontal element 221, and may be inclined at a predetermined angle.

A length S of the horizontal part 52 of the standing wave canceller 5 is adjusted so as to satisfy the following equation (2).

$$\lambda \cdot \gamma / 6 \leq S \leq \lambda \cdot \gamma / 3 \qquad (2)$$

In particular, S is preferably a length in the neighborhood of $\lambda/4$, but the present invention is not limited thereto, and may be shifted by about 100 mm from here.

Also, as shown in equation (2), if the standing wave canceller 5 is a length including $\lambda/4$, the influence of the standing wave on the DAB antenna element 4 can be mitigated, even when a standing wave of the reception wavelength band of the DAB antenna element 4 occurs in the defogger 2, for example. This is because a current that affects the reception wavelength band of the DAB antenna element 4 can be induced in the standing wave canceller 5.

1-6. Material

A defogger 2, antenna elements 3 and 4 and a standing wave canceller 5 such as described above can be formed by laminating a conductive material having conductivity on the surface of the glass plate 1, such that a predetermined linear pattern is formed. Such a material need only have conductivity, and is selectable as appropriate according to the embodiment, with silver, gold, platinum and the like given as examples. These members can be formed by, for example, printing and baking a conductive silver paste containing silver powder, glass frit and the like on the surface of the glass plate 1.

1-7. Manufacturing Method

Next, a manufacturing method of the window glass according to the present embodiment will be described. The glass plate 1 of the window glass according to the present embodiment can be shaped by methods such as a press-molding method for shaping the glass plate 1 with a press or a self-weight bending method for bending the glass plate 1 under its own weight.

Here, at the time of shaping the glass plate 1 with these respective methods, the glass plate 1 is heated to a vicinity of the softening point in a heating furnace. Before being placed in this heating furnace, the glass plate 1 is flat in shape, and a paste for the various members mentioned above, such as a silver paste, for example, is printed on the surface of this glass plate 1. Then, by placing the glass plate 1 in the heating furnace, the silver paste printed on the glass plate 2 is baked together with shaping the glass plate 1, enabling the defogger 2, the antenna elements 3 and 4 and the standing wave canceller 5 to be formed.

2. Features

According to the present embodiment, as described above, in a vehicle window glass that has a defogger 2 and a DAB antenna element 4, a standing wave canceller 5 is connected to the defogger 2. The following effects can thereby be obtained. First, in the current distribution of the defogger 2, a current caused by the standing wave that is excited in the bus bars 21a and 21b and the horizontal elements 22 (length L) partitioned by the FM antenna element 23 will be dominant. The length L ($\lambda\cdot\gamma/3\leq L\leq\lambda\cdot\gamma/1.5$) of the partitioned horizontal elements 22 is, in the case of a common sedan type automobile, for example, about 500 mm to 600 mm, and when the length obtained by applying the shortening rate (approx. 0.65) thereto is assumed to be a half wavelength, the frequency band corresponding to this wavelength roughly coincides with the frequency band of DAB band 3. Thus, the radio waves that should originally be received by the DAB antenna element 4 are excited as a standing wave in the defogger 2, and, as a result, the reception sensitivity of the DAB antenna element 4 decreases. That is, radio waves of the frequency band of the DAB antenna element 4 are trapped by the defogger 2.

In contrast, when the horizontal part 52 of the standing wave canceller 5 is set to a length S that satisfies equation (2), such as to S=$\lambda$/4, for example, such as in the above embodiment, a decrease in the reception sensitivity of the DAB antenna element 4 can be suppressed. This principle utilizes the characteristic as an open stub in which the current that flows in the standing wave canceller 5 reaches a maximum amplitude at a connection point with the defogger 2, and is based on an action that causes the defogger 2 to generate a current originating in the open stub and weakens the current caused by the standing wave that was dominant.

Note that the length S of the standing wave canceller 5 satisfies equation (2), and the standing wave that occurs in the standing wave canceller 5 does not adversely affect the DAB antenna element 4. This is because this length S does not satisfy the range of the abovementioned equation (1).

3. Variations

An embodiment of the present invention has been described above, but the present invention is not limited to the above embodiment, and various changes can be made without departing from the gist of the invention. Note that the following variations can be combined as appropriate.

3-1

Although one FM antenna element 23 is provided in the defogger 2 of the above embodiment, two or more FM antenna elements may be provided. In this case, the distance L between the bus bars 21a and 21b and the FM antenna elements or the distance L between the FM antenna elements, the wavelength $\lambda$ of the reception wave of the DAB antenna element 4 and the wavelength shortening rate $\gamma$ of the glass plate need to satisfy the abovementioned equation (1). Also, the FM antenna element 23 need only intersect at least one horizontal element 22, and need not necessarily intersect all of the horizontal elements 22.

Also, in the above embodiment, equation (1) was used to derive the range of the distance L between each of the bus bars 21a and 21b and the FM antenna element 23, but the range may be derived such that the following equation (3) is satisfied.

$$(\lambda\cdot\gamma/3)\cdot n\leq L\leq(\lambda\cdot\gamma/1.5)\cdot n \quad (3)$$

Note that n is an integer.

That is, the above equation (1) is an equation showing the case where n=1 in equation (3), but even when n is an integer of two or more, a standing wave that affects the reception performance of the DAB antenna element 4 occurs, if the length L of the horizontal elements 22 partitioned by the FM antenna element 23 satisfies equation (3) .

Here, consideration of the above equation (3) reveals the following. As described above, a standing wave (stationary wave) is a wave that occurs in the defogger 2. Generally, the waveform appears to be oscillating in a stationary state without travelling.

Incidentally, in the defogger 2, resonance occurs in the wavelength band attributable to the above length L under the same principle as the standing wave, the source of the resonance being the car engine or vibration that occurs while driving. One or a plurality of types of these resonance frequencies can occur. FIG. 2 is a diagram representing the resonance state. The wave for n=1 is the wave at which the resonance frequency is smallest, and the waves of resonances (stationary waves) for n=2 to 4 are also represented in the diagram.

The frequency band of the stationary wave that can occur in the defogger 2 is originally attributable to the length L as described above, and not only one but a plurality of types of frequencies could possibly occur in the frequency band of this stationary wave. This relationship is as follows when represented as an equation. [1]

$$\frac{n\lambda_n}{2} = L \qquad (4)$$

Accordingly, equation (3) holds true even in cases other than n=1, that is, even when n is an integer of two or more.

3-2

In the above embodiment, the FM antenna element 3 is provided, but in the vehicle window glass according to the present invention, at least the defogger 2, the DAB antenna element 4 and the standing wave canceller 5 need only be provided, and the FM antenna element 3 is not necessarily required. Such an antenna element may, however, be added, and, for example, an AM antenna element, a key antenna element or the like can also be provided, apart from an FM antenna element. A key antenna element is, for example, an antenna element for receiving signals for locking and unlocking a door by remote control, such as keyless entry or smart entry.

3-3

In the above embodiment, the DAB antenna element 4 was constituted by a dipole antenna, but can, in a vehicle window glass not having all the features of the independent claim, also be constituted by a so-called monopole antenna in which the ground connection element is omitted. Also, the DAB antenna element 4 may be configured in modes other than that described above, and may be formed by combining straight and curved wire material as appropriate.

3-4

In the above embodiment, the DAB antenna element 4 is provided upward of the defogger 2, but may also be provided downward of the defogger 2. In this case, the standing wave canceller 5 need only be disposed further on the defogger 2 side than the DAB antenna element 4. This is because the connection to the defogger 2 is facilitated by disposing the standing wave canceller 5 on the defogger 2 side.

For example, in a sedan type vehicle, the reception performance of the DAB antenna element 4 tends to be affected by the trunk or the rear tray, since the attachment angle of the rear glass approaches horizontal. Accordingly, with a sedan type vehicle, the DAB antenna element 4 is preferably provided upward of the defogger 2. On the other hand, in the case where the attachment angle of the glass approaches vertical, as with a hatchback type vehicle, the reception performance is little affected, since there are no metal portions such as the trunk of a sedan type vehicle. Accordingly, in this case, the DAB antenna element 4 may be provided downward of the defogger 2.

3-5

The position in which the standing wave canceller 5 is provided is not particularly limited, and the following modes are possible. This is because performance does not change depending on the position thereof, since the standing wave canceller 5 acts to weaken the current caused by the standing wave in the defogger 2, rather than acting to block the standing wave, as mentioned above.

(1) The connection part 51 of the standing wave canceller 5 can be connected to the upper end portion of the left-side bus bar 21b, the upper end portion of the FM antenna element 23 or any position of the uppermost horizontal element 221.

(2) The standing wave canceller 5 can be disposed on the opposite side to the DAB antenna element 4 with the defogger 2 interposed therebetween, that is, downward of the defogger 2. In this case, the connection part 51 of the standing wave canceller 5 can be connected to the lower end portion of one of the bus bars 21a and 21b, the lower end portion of the FM antenna element 23 or any position of the lowermost horizontal element 222.

(3) The standing wave canceller 5 can also be constituted as in (1) and (2) described above, in the case where the DAB antenna element 4 is provided downward of the defogger 2.

3-6

In the above embodiment, the standing wave canceller 5 is constituted by the connection part 51 and the horizontal part 52, and need only have at least these regions, but may, for example, be additionally provided with a plurality of horizontal parts or may by formed by combining a plurality of straight or curved wire materials as appropriate. Also, although the horizontal part 52 of the standing wave canceller 5 can be set to various lengths, these lengths preferably satisfy the above equation (2).

3-7

With regard to the wavelength λ of the reception wave of the DAB antenna element 4, apart from using a wavelength corresponding to a specific frequency, it is possible, in the case of considering a predetermined frequency band, to calculate equations (1) to (4) using the wavelength corresponding to a median value or an average value of the frequency band of the reception waves that are envisioned, for example.

3-8

In the above embodiment, an example was shown in which a glass antenna according to the present invention is mounted on the rear glass of an automobile, but the glass antenna can also mount on the glass surface of glass other than the rear glass.

Working Examples

Hereinafter, working examples of the present invention will be described. The present invention is, however, not limited to the following working examples.

1. Influence of defogger on reception performance of DAB antenna element

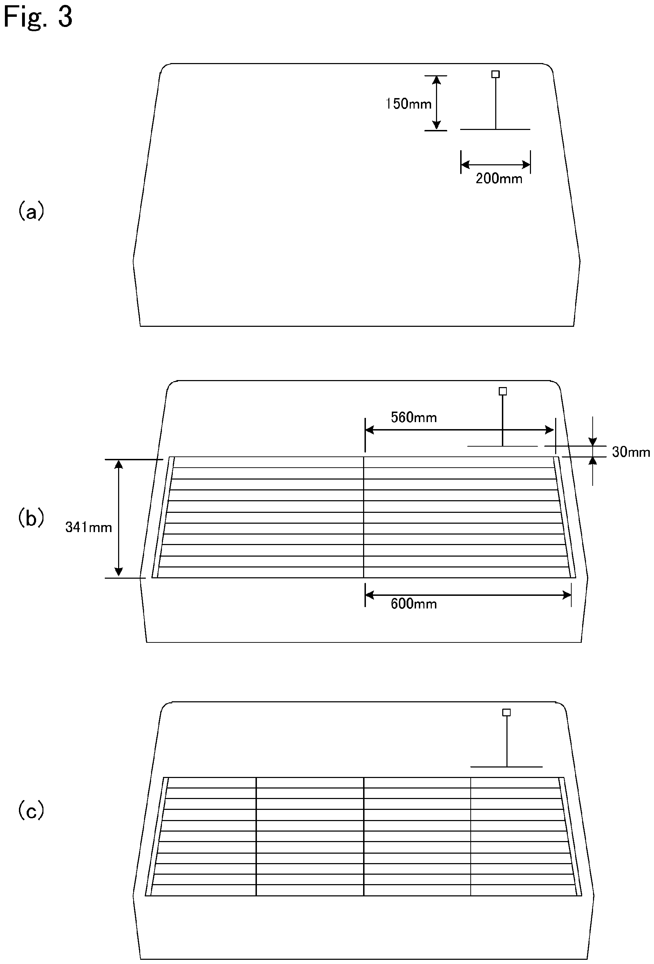

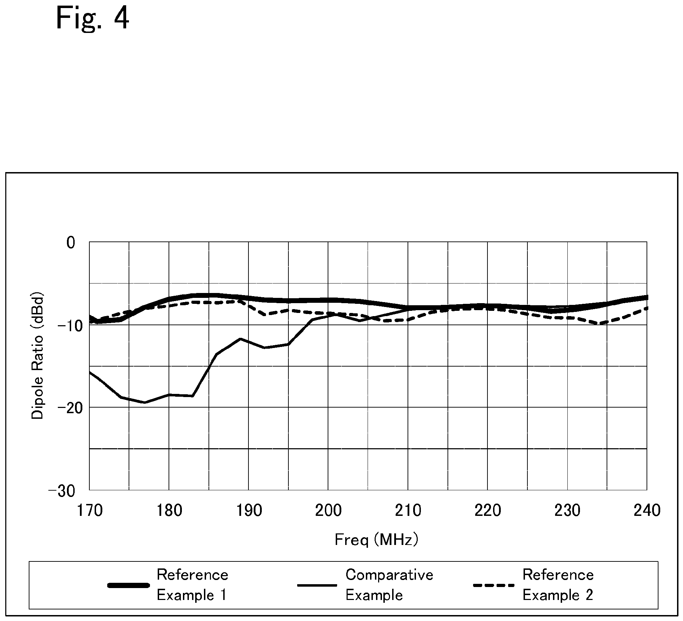

First, the influence of the defogger in the case of using a DAB antenna element was considered using the model shown in FIGS. 3. FIG. 3(a) is a model (reference example 1) in which a monopole DAB antenna element formed in a T-shape was disposed in the upper right of the glass plate, and FIG. 3(b) is a model (comparative example)in which a defogger was disposed in addition to the DAB antenna element of FIG. 3(a). The numerical values in the diagram are dimensions. Also, FIG. 3(c) is a model (reference example 2) in which three vertical antenna elements were provided in the defogger substantially evenly, and was otherwise the same as the comparative example of FIG. 3(b) in all respects including dimensions. The reception performance in DAB band 3 (174 to 240 MHz) was calculated using three dimensional electromagnetic field simulation software. In this simulation, a configuration was adopted in which a standing wave of approximately 170 to 190 MHz, which is the reception frequency band of DAB, was present in the defogger. Also, the shortening rate of the glass plate was set to 0.65. The results are as shown in FIG. 3.
As shown in FIG. 4, on comparison of the reference example 1 and the comparative example, it is evident that, in the comparative example, the reception performance of the DAB antenna element decreases generally in the 170 to 200 MHz frequency band, due to this defogger being provided, under the influence of a standing wave of approximately 170 to 190 MHz existing in the defogger as described above. That is, the radio waves in this frequency band, out of the radio waves that should be received by the DAB antenna element, exist as a standing wave in the defogger. To be more specific, since $\lambda/2$ of the center frequency 200 MHz of DAB will be 500 mm if $\gamma$=0.65, for example, equation (1) will be $333 \leq L \leq 666$. With respect to this, in the comparative example, since the length L is 560 to 600 mm, and satisfies equation (1), a standing wave that affects the reception performance of the DAB antenna element will occur in the defogger.
On the other hand, in the reference example 2, since three vertical antenna elements are provided, the length L of the horizontal elements partitioned by these vertical antenna elements is roughly 280 to 300 mm. Accordingly, the length L in the reference example 2 does not satisfy the above equation (1). As a result, in the reception frequency band of the DAB antenna element, similar reception performance to the reference example 1 is obtained, and the influence of the standing wave that exists in the defogger is eliminated, as shown in FIG. 4.

2. Standing wave canceller and influence of length thereof

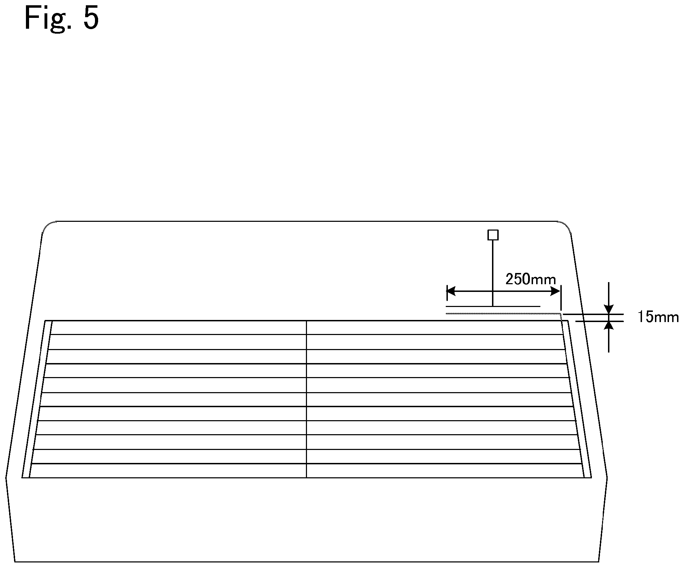

In view of this, the change in reception performance as a result of providing a standing wave canceller in the model shown in FIG. 3(b) was considered. Specifically, as shown in FIG. 5, a standing wave canceller was provided at the upper end of the right-side bus bar. Working examples 1 to 5 in which the length of the connection part of this standing wave canceller was 15 mm and the length of the horizontal part was as shown in the following table 1 were prepared. Note that, in FIG. 5, the working example 3 is shown as a representative example, and the other working examples 1, 2, 4 and 5 are examples in which the length of the horizontal part in FIG. 5 is changed.

EP 3 321 115 B1

Table 1

| | Length of Horizontal Part |
|---|---|
| Working Example 1 | 200 mm |
| Working Example 2 | 225 mm |
| Working Example 3 | 250 mm |
| Working Example 4 | 275 mm |
| Working Example 5 | 300 mm |

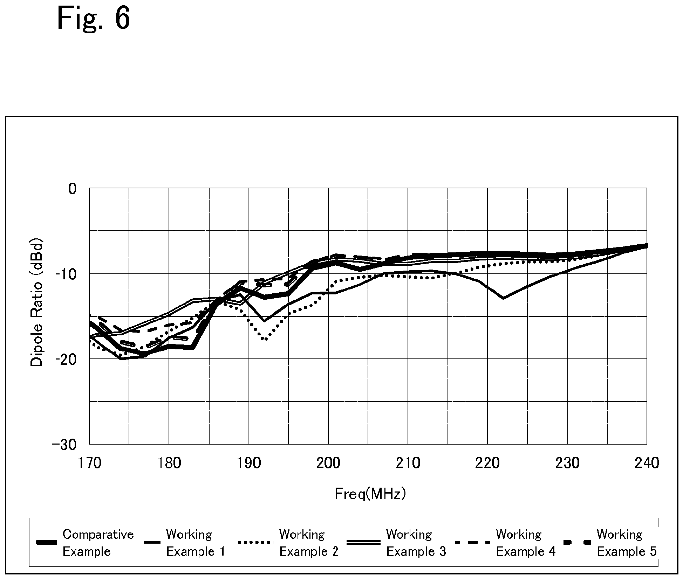

As shown in FIG. 6, in the working examples 1 to 5 that use the standing wave canceller, it is evident that the decline in reception performance for 170 to 190 MHz in the comparative example is generally ameliorated. Of these, the reception performance in the working example 3 is the highest. This is for the following reason. That is, when the average of the reception frequencies of the DAB antenna element is set to approximately 200 MHz and the shortening rate of the glass plate is set to 0.65, the average wavelength λ of the reception frequencies will be approximately 1 m, and based on this, the length of the horizontal part of the standing wave canceller according to the working example 3 will be equivalent to λ/4 (=250 mm).

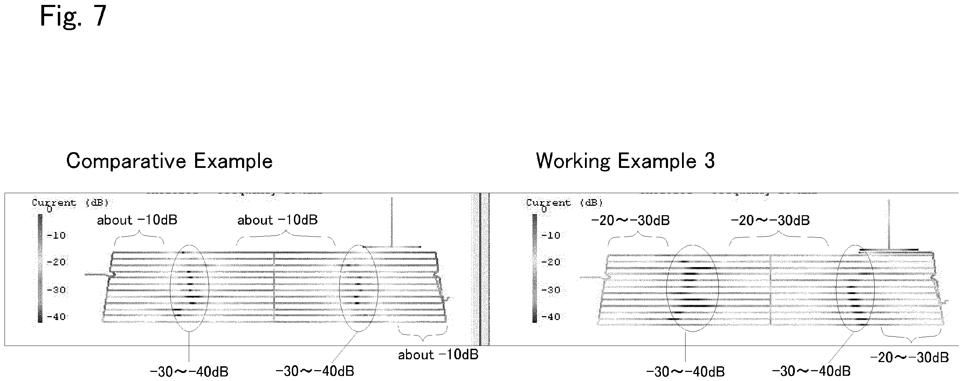

Here, the current distribution (180 MHz) of the defogger in the comparative example and the working example 3 is shown in FIG. 7. According to FIG. 7, it is evident that, in the working example 3, the current in the defogger is small, compared with the comparative example. Accordingly, in working example 3, the reception performance of a DAB antenna element is thereby improved.

3. Influence of connection position of standing wave canceller

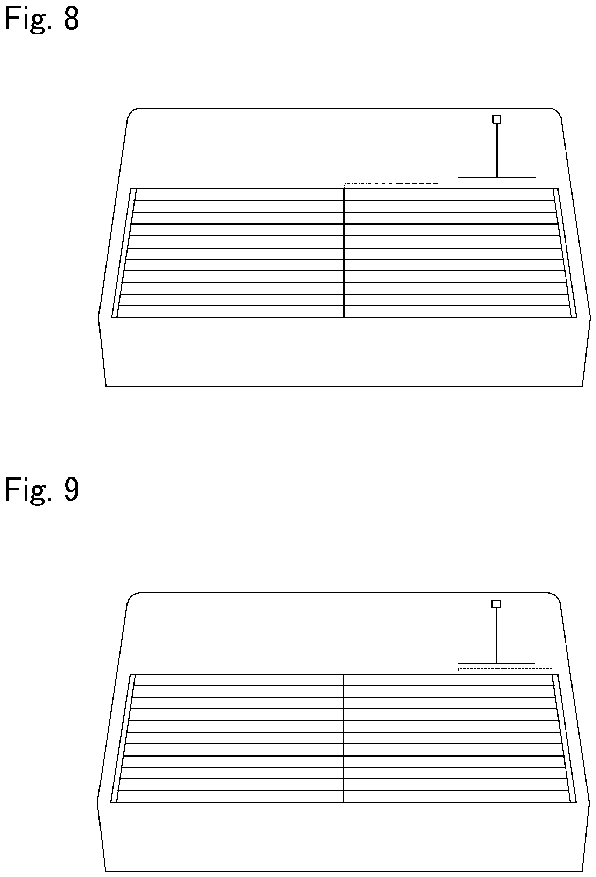

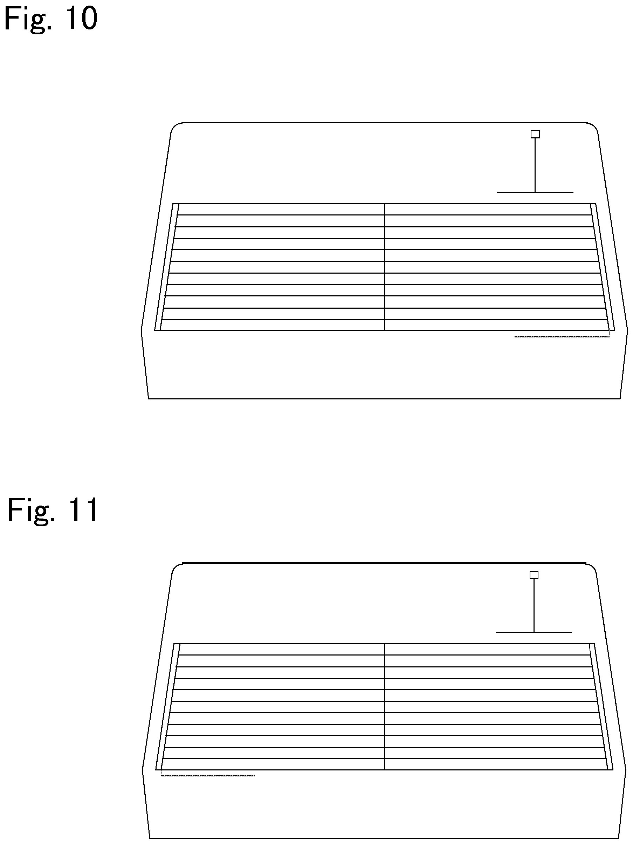

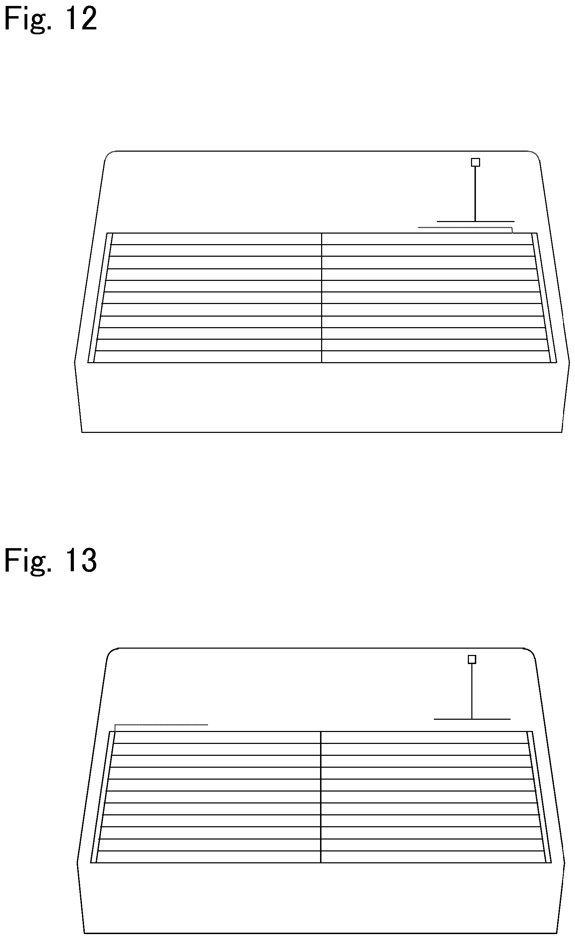

Next, the relationship between the connection position of the standing wave canceller and reception performance was considered. Hereinafter, the reception performance when the length of the connection part of the standing wave canceller was 15 mm, the length of the horizontal part was 250 mm, and the standing wave canceller was connected to six different places was computed. The specific connection position of the standing wave canceller was as shown in the following Table 2 and FIGS. 8 to 13.

Table 2

| | Working Example 6 | Working Example 7 | Working Example 8 | Working Example 9 | Working Example 10 | Working Example 11 |
|---|---|---|---|---|---|---|
| Position of standing wave canceller | Upper end of FM antenna element (vertical antenna element) | Between FM antenna element & right-side bus bar in uppermost horizontal element | Lower end of right-side bus bar | Lower end of left-side bus bar | 50 mm to left side from upper end of right-side bus bar in uppermost horizontal element | Upper end of left-side bus bar |
| Diagram | FIG. 8 | FIG. 9 | FIG. 10 | FIG. 11 | FIG. 12 | FIG. 13 |

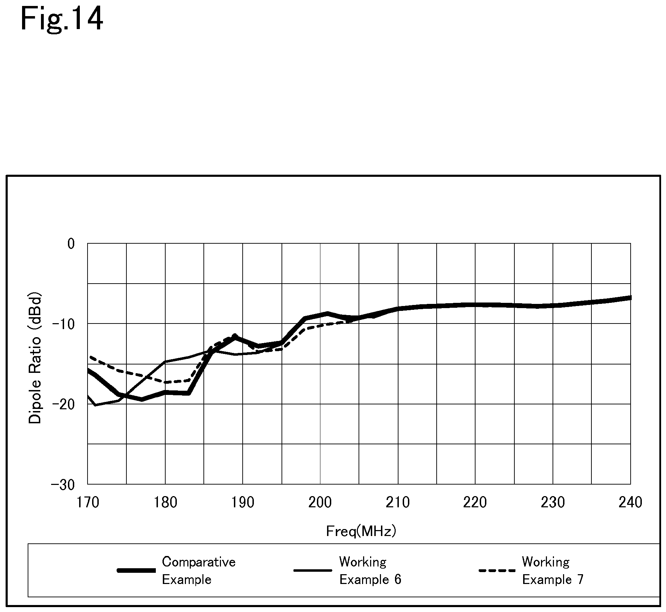

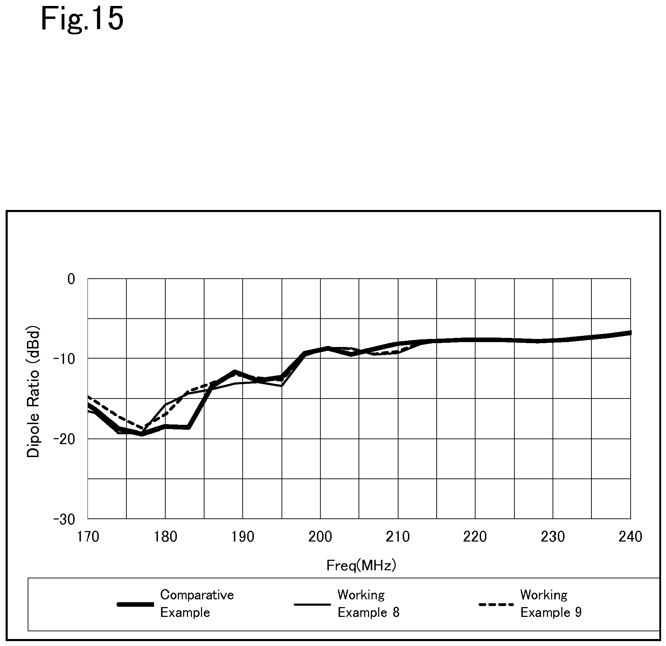

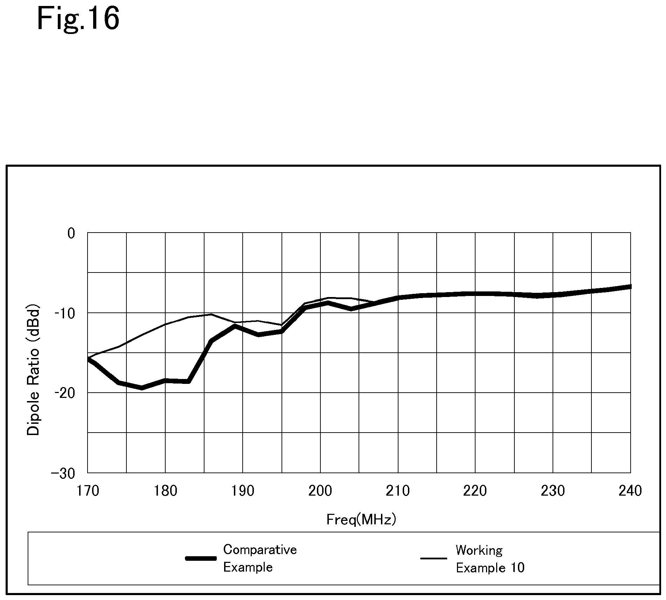

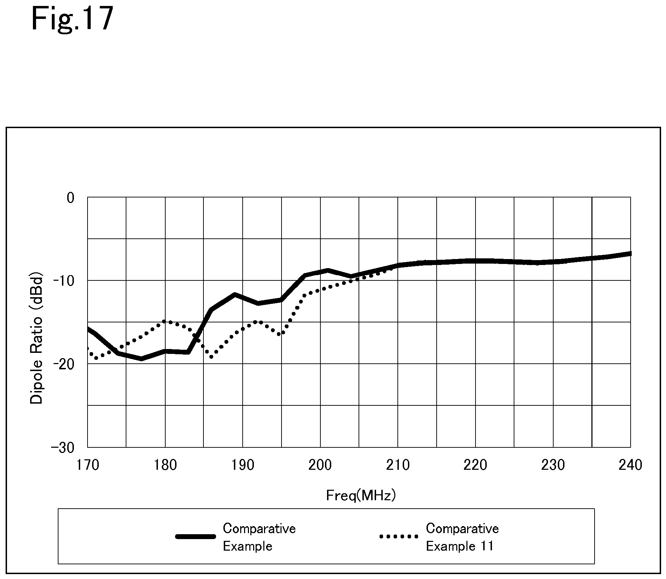

The results related to reception performance are as shown in FIGS. 14 to 17. According to these diagrams, it is evident that the decline in reception performance for 170 to 190 MHz in the comparative example is generally ameliorated at whatever position the standing wave canceller is connected.

Reference Signs List

1    Glass Plate
2    Defogger
22   Horizontal Element (Horizontal Heating Wire)
23   FM Antenna Element (Vertical Antenna Element)
4    DAB Antenna Element

5 Standing Wave Canceller
21a Bus Bar
21b Bus Bar

## Claims

1. A vehicle window glass comprising:

   a glass plate (1), which is a single glass plate or a laminated glass in which an intermediate film is sandwiched by two glass plates;
   a pair of bus bars (21a, 21b) formed on the glass plate (1);
   a defogger (2) having a plurality of horizontal heating wires (22) that connect the pair of bus bars (21a, 21b) ;
   at least one vertical antenna element (23) provided in the defogger (2) and intersecting at least one of the horizontal heating wires (22);
   a DAB antenna element (4) formed on the glass plate (1) and disposed on an upper side or a lower side of the defogger (2); and
   a standing wave canceller (5) disposed further on the defogger side than the DAB antenna element (4),
   wherein a distance L between each of the bus bars (21a, 21b) and the vertical antenna element (23) or a distance L between the vertical antenna elements (23), a wavelength $\lambda$ of a reception wave of the DAB antenna element (4) and a wavelength shortening rate $\gamma$ of the glass plate (1) satisfy $(\lambda \cdot \gamma / 3) \cdot n \leq L \leq (\lambda \cdot \gamma / 1.5) \cdot n$, where n is an integer, and where $\gamma$ is approximately 0.7 when the glass plate is a single glass plate and $\gamma$ is approximately 0.5 when the glass plate is a laminated glass,
   the DAB antenna element (4) is constituted by a dipole antenna,
   the standing wave canceller (5) is disposed between the DAB antenna element (4) and the defogger (2).

2. The vehicle window glass according to claim 1, wherein n is 1.

3. The vehicle window glass according to claim 1 or 2,

   wherein the standing wave canceller (5) has at least one horizontal part extending along the horizontal heating wires (22), and a connection part connected to the vertical antenna element (23) or one of the bus bars (21a, 21b), and
   a length S of the horizontal part satisfies $\lambda \cdot \gamma / 6 \leq S \leq \lambda \cdot \gamma / 3$, where $\gamma$ is approximately 0.7 when the glass plate is a single glass plate and $\gamma$ is approximately 0.5 when the glass plate is a laminated glass.

4. The vehicle window glass according to any one of claims 1 to 3, wherein the DAB antenna element (4) is disposed on the upper side of the defogger (2).

5. The vehicle window glass according to any one of claims 1 to 4, wherein a distance between the standing wave canceller (5) and the defogger (2) is 50 mm or less.

6. The vehicle window glass according to any one of claims 1 to 5, wherein a distance between the DAB antenna element (4) and the defogger (2) is 5 to 100 mm.

## Patentansprüche

1. Fahrzeugfensterglas, umfassend:

   eine Glasplatte (1), die eine Einzelglasplatte oder ein laminiertes Glas ist, in dem ein Zwischenfilm sandwichartig von zwei Glasplatten eingeschlossen ist;
   ein Paar von Sammelschienen (21a, 21b), die auf der Glasplatte (1) ausgebildet sind;
   eine Scheibenheizvorrichtung (2), die eine Vielzahl von horizontalen Heizdrähten (22) aufweist, die mit dem Paar von Sammelschienen (21a, 21b) verbunden sind;
   zumindest ein vertikales Antennenelement (23), das in der Scheibenheizvorrichtung (2) bereitgestellt ist und zumindest einen der horizontalen Heizdrähte (22) schneidet;
   ein DAB-Antennenelement (4), das auf der Glasplatte (1) ausgebildet und auf einer Oberseite oder einer Unterseite der Scheibenheizvorrichtung (2) angeordnet ist; und

eine Stehende-Wellen-Unterdrückungsvorrichtung (5), die weiter auf der Scheibenheizvorrichtungsseite angeordnet ist als das DAB-Antennenelement (4),

wobei ein Abstand L zwischen jeder der Sammelschienen (21a, 21b) und dem vertikalen Antennenelement (23) oder ein Abstand L zwischen den vertikalen Antennenelementen (23), eine Wellenlänge $\lambda$ einer Empfangswelle des DAB-Antennenelements (4) und eine Wellenlängen-Verkürzungsrate $\gamma$ der Glasplatte (1) $(\lambda \cdot \gamma/3) \cdot n \leq L \leq (\lambda \cdot \gamma/1.5) \cdot n$, erfüllen, wobei n eine ganze Zahl ist und wobei $\gamma$ etwa 0,7 beträgt, wenn die Glasplatte eine Einzelglasplatte ist, und $\gamma$ etwa 0,5 beträgt, wenn die Glasplatte laminiertes Glas ist,

wobei das DAB-Antennenelement (4) aus einer Dipolantenne besteht,

wobei die Stehende-Wellen-Unterdrückungsvorrichtung (5) zwischen dem DAB-Antennenelement (4) und der Scheibenheizvorrichtung (2) angeordnet ist.

2.  Fahrzeugfensterglas nach Anspruch 1, wobei n = 1 ist.

3.  Fahrzeugfensterglas nach Anspruch 1 oder 2,

wobei die Stehende-Wellen-Unterdrückungsvorrichtung (5) zumindest einen horizontalen Teil, der sich entlang der horizontalen Heizdrähte (22) erstreckt, und einen Verbindungsteil aufweist, der mit dem vertikalen Antennenelement (23) oder einer der Sammelschienen (21a, 21b) verbunden ist, und

eine Länge S des horizontalen Teils $\lambda \cdot \gamma/6 \leq S \leq \lambda \cdot \gamma/3$ erfüllt, wobei $\gamma$ etwa 0,7 beträgt, wenn die Glasplatte eine Einzelglasplatte ist, und $\gamma$ etwa 0,5 beträgt, wenn die Glasplatte laminiertes Glas ist.

4.  Fahrzeugfensterglas nach einem der Ansprüche 1 bis 3, wobei das DAB-Antennenelement (4) auf der Oberseite der Scheibenheizvorrichtung (2) angeordnet ist.

5.  Fahrzeugfensterglas nach einem der Ansprüche 1 bis 4, wobei ein Abstand zwischen der Stehende-Wellen-Unterdrückungsvorrichtung (5) und der Scheibenheizvorrichtung (2) 50 mm oder weniger beträgt.

6.  Fahrzeugfensterglas nach einem der Ansprüche 1 bis 5, wobei ein Abstand zwischen dem DAB-Antennenelement (4) und der Scheibenheizvorrichtung (2) 5 bis 100 mm beträgt.

**Revendications**

1.  Vitre de fenêtre de véhicule comprenant :

une plaque de verre (1), qui est une plaque de verre unique ou un verre feuilleté dans lequel un film intermédiaire est enserré par deux plaques de verre ;

une paire de barres omnibus (21a, 21b) formées sur la plaque de verre (1) ;

un désembueur (2) présentant une pluralité de fils chauffants horizontaux (22) qui connectent la paire de barres omnibus (21a, 21b) ;

au moins un élément d'antenne vertical (23) prévu dans le désembueur (2) et recoupant au moins l'un des fils chauffants horizontaux (22) ;

un élément d'antenne DAB (4) formé sur la plaque de verre (1) et disposé sur un côté supérieur ou un côté inférieur du désembueur (2) ; et

un suppresseur d'ondes stationnaire (5) disposé plus loin du côté du désembueur que l'élément d'antenne DAB (4),

dans laquelle une distance L entre chacune des barres omnibus (21a, 21b) et l'élément d'antenne vertical (23) ou une distance L entre les éléments d'antenne verticaux (23), une longueur d'onde $\lambda$ d'une onde de réception de l'élément d'antenne DAB (4)

et un taux de contraction de longueur d'onde $\gamma$ de la plaque de verre (1) satisfont à $(\lambda \cdot \gamma/3) \cdot n \leq L \leq (\lambda \cdot \gamma/1,5) \cdot n$, où n est un nombre entier, et où $\gamma$ est approximativement 0,7 lorsque la plaque de verre est une plaque de verre unique et $\gamma$ est approximativement 0,5 lorsque la plaque de verre est un verre feuilleté,

l'élément d'antenne DAB (4) est constitué par une antenne dipôle,

le suppresseur d'ondes stationnaire (5) est disposé entre l'élément d'antenne DAB (4) et le désembueur (2).

2.  Vitre de fenêtre de véhicule selon la revendication 1, dans laquelle n est 1.

**3.** Vitre de fenêtre de véhicule selon la revendication 1 ou 2,

dans lequel le suppresseur d'ondes stationnaire (5) présente au moins une partie horizontale s'étendant le long des fils chauffants horizontaux (22), et une partie de connexion connectée à l'élément d'antenne vertical (23) ou à l'une des barres omnibus (21a, 21b), et

une longueur S de la partie horizontale satisfait à $\lambda \cdot \gamma/6 \leq S \leq \lambda \cdot \gamma/3$, où $\gamma$ est d'environ 0,7 lorsque la plaque de verre est une plaque de verre unique et $\gamma$ est d'environ 0,5 lorsque la plaque de verre est un verre feuilleté.

**4.** Vitre de fenêtre de véhicule selon l'une quelconque des revendications 1 à 3, dans laquelle l'élément d'antenne DAB (4) est disposé sur le côté supérieur du désembueur (2).

**5.** Vitre de fenêtre de véhicule selon l'une quelconque des revendications 1 à 4, dans laquelle une distance entre le suppresseur d'ondes stationnaire (5) et le désembueur (2) est de 50 mm ou moins.

**6.** Vitre de fenêtre de véhicule selon l'une quelconque des revendications 1 à 5, dans laquelle une distance entre l'élément d'antenne DAB (4) et le désembueur (2) est de 5 à 100 mm.

# Fig. 1

# Fig. 2

## Fig. 3

(a)

(b)

150mm

200mm

560mm

30mm

341mm

600mm

(c)

Fig. 4

Fig. 5

# Fig. 6

Fig. 7

Comparative Example

Working Example 3

Fig. 8

Fig. 9

Fig. 10

Fig. 11

Fig. 12

Fig. 13

Fig.14

# Fig.15

Fig.16

Fig.17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000101323 A
- EP 2458672 A1
- JP 2014216805 A